# EUROPÄISCHE PATENTANMELDUNG

(11) **EP 3 677 626 A1**
(43) Veröffentlichungstag der Anmeldung: **08.07.2020**
(21) Anmeldenummer: 19020001.4
(22) Anmeldetag: 02.01.2019
(51) Int. Cl.: C08J 11/00, C10L 1/14, C10L 1/30

(54) **BEREITGESTELLTE KOLLOIDAL VORLIEGENDE FUNKTIONALE FLUIDMISCHUNG**

(71) Anmelder: Pecora, Gianluca, 66907 Rehweiler (DE); Jodlauk, Jörg, 55777 Mettweiler (DE); Fischer, Martin, 67259 Beindersheim (DE)
(72) Erfinder: Pecora, Gianluca, 66907 Rehweiler (DE); Jodlauk, Jörg, 55777 Mettweiler (DE); Triem, Albert, 66606 St. Wendel (DE); Jodlauk, Jonathan, 55777 Mettweiler (DE); Fischer, Martin, 67259 Beindersheim (DE)

(57) **Zusammenfassung**

Die vorliegende Schrift beschreibt die Herstellung und die Bereitstellung einer kolloidalen Fluidmischung aus liphophilen und lipophoben Bestandteilen in ihrer Hauptanwendung als Energieträger.

## Beschreibung

Die vorliegende Schrift beschreibt die Herstellung und die Bereitstellung einer kolloidalen Fluidmischung aus liphophilen und lipophoben Bestandteilen in ihrer Hauptanwendung als Energieträger. Dabei besteht das Fluid bzw. die Fluidmischung aus kolloidal vorliegenden Komponenten; zum einen aus einem hergestellten und vorliegenden kolloidalen multifunktionalen Carbosuboxid-Phorpyhrin-Anionat und anderseits aus einer kolloidalem multifunktionalen Polymerrecyclat-Komposition.

Die vorliegende Erfindung betrifft somit in einer Ausführung pulverförmig oder in Lösung vorliegend katalytisch wirksame Carbosuboxid-Phorpyhrin-Anionate und Mischungen derselben mit einer geringen Korngröße im kolloidalem Bereich, wobei die Porphyrinstruktur organisch oder anorganischer Natur sein kann.

Vorzugsweise beträgt die Korngröße als d90-Wert des erfindungsgemäßen pulverförmig vorliegenden Carbosuboxid-Phorpyhrin-Anionat weniger als 900 nm und vorzugsweise weniger als 800 nm, insbesondere weniger als 750 nm, beispielsweise weniger als 700 nm, wie weniger als 650 nm, vorzugsweise weniger als 600 nm, insbesondere weniger als 550 nm, wie weniger als 500 nm oder weniger als 450 nm und vorzugsweise weniger als 400 nm, insbesondere weniger als 350 nm, beispielsweise weniger als 300 nm, wie weniger als 250 nm, vorzugsweise weniger als 200 nm, insbesondere weniger als 200 nm, wie weniger als 150 nm oder weniger als 100 nm, jeweils bestimmt gemäß ISO 20998-1:2006.

Ferner betrifft die Erfindung ein Verfahren zur Herstellung des Pulvers, eine kolloidale Lösung, die dieses Pulver umfasst, die Verwendung des Pulvers oder der kolloidalen Lösung speziell in einem Alterationsprozess. Dieser findet bei Temperaturen < 100°C, vorzugsweise bei < 60°C und im speziellem bei < 40°C und ohne den expliziten Einsatz von Ölsäure oder Ölsäurederivaten statt in kombinatorischer Zusammensetzung mit kolloidalem multifunktionalen Polymerrecyclat-Komposition mit dem Ziel eine Kolloidemulsion herzustellen. Hierbei können die Komponenten aus Poymerrecylat und Carbosuboxid-Porpyhrin-Anionat in jedem beliebigen Verhältnis miteinander gemischt werden.

Die Bereitstellung der erfindungsgemäßen Polymerrecyclat-Komposition ist dadurch gekennzeichnet, dass die Korngröße als d90-Wert weniger als 1550 nm beträgt, vorzugsweise weniger als 1400 nm, insbesondere weniger als 1300 nm, beispielsweise weniger als 1200 nm, wie weniger als 1100 nm, vorzugsweise weniger als 1000 nm, weniger als 900 nm und vorzugsweise weniger als 800 nm, insbesondere weniger als 750 nm, beispielsweise weniger als 700 nm, wie weniger als 650 nm, vorzugsweise weniger als 600 nm, insbesondere weniger als 550 nm, wie weniger als 500 nm oder weniger als 450 nm und vorzugsweise weniger als 400 nm, insbesondere weniger als 350 nm, beispielsweise weniger als 300 nm, wie weniger als 250 nm, vorzugsweise weniger als 200 nm, insbesondere weniger als 200 nm, wie weniger als 150 nm oder weniger als 100 nm, jeweils bestimmt gemäß ISO 20998-1:2006.

Vorzugsweise wird das Polymerrecylat aus den Verbindungen und Derivaten der Polyester, Polyethylene, Polyethylenphtalate, Polyproylene und Propylenphtalate gewonnen, kann aber auch aus jedem anderen Kunststoff gebildet werden. Die Aufbereitung erfolgt hier energiearm vorzugzweise ohne den Einsatz von Temperatuten > 100°C in einem modifizierten Mahlvorgang, der eigens für die erfindungsgemäßen Zusammensetzung ersonnen wurde.

Die hergestellte Kolloidemulsion bestehend aus den beschriebenen Komponenten zeichnet sich widerum als langzeitstabile Mischung aus und zwar in einem breiten Temperaturbereich von vorzugsweise -15°C bis 120°C, insbesondere jedoch im Bereich von -10°C bis 100°C und im speziellem von -5°C bis 80°C. Mit der Stabilität ist das Nichtvorhandensein oder das weitgehende Nichtvorhandensein von Phasentrennungen von wässrigen und nichtwässrigen kolloidalen oder mehrmodalen Fluidbestandteilen gemeint, vielmehr kann die Flüssigkeitsmischung als transparente Nanoemulsion bezeichneten werden.

Bei den Flüssigkeitsgemischen geht es des Weiteren im Besonderen um die Herstellung von Kunstoff-Wasser-Lösungen, die sich widerum durch eine geringe Korngröße im kolloidalen Bereich auszeichnen, die sich jedoch aus der jeweiligen wahlweise freien Mischung der Einzelkomponenten ergibt. Im Besonderen werden hierbei Kunststoffe wir beschrieben aus dem Bereich der Polyethylene, Polyethylenphtalate, Polypropylene und Polypropylenphtalate bevorzugt. Die Kunststoffe werden hierbei in einen kolloidalen Bereich als Flüssigkeit überführt, wobei die Flüssigkeit weitgehend wasserunlöslich ist. Diese Flüssigkeit kann in jedem beliebigen Verhältnis mit jeglichen anderen natürlichen oder synthetisch hergestellten organischen superhydrophoben Flüssigkeiten oder Pulvern gemischt werden.

Ferner betrifft die vorliegende Erfindung der so hergestellten Fluidmischung oder die einer pulverförmigen und wieder redispergierbare Form dieser Flüssigkeitsmischung die Verwendung im jeglichen Bereich der Energiegewinnung und Energiespeicherung. Dies beschreibt zum Beispiel den Einsatz als Oxidationstoff in Oxidationsaggregaten, den Einsatz in Solarzellen, Grätzelzellen oder ähnlichen Bauteilen, sowie den Einsatz in Primär- und Sekundärbatterien in Form als Elektolyt oder als Elektrodenmaterial. Als Oxidationsstoff kann es dabei für sich alleine oder beliebig in jedem Verhältnis mit jedem bekannten Stoff zur Erzeugung derselben Wirkung gemischt und kombiniert werden.

In einem weiteren Aspekt betrifft die Erfindung die funktionalisierte Verwendung dieses Pulvers oder der kolloidalen Lösung in anderen Märkten wie im Bereich der Verarbeitung, Veredlung oder Weiterverabeitung zum Beispiel bei der Herstellung von Keramik, Glas, Beton, Putzen, Mörteln, Klebern, Lacke, Farben, Textilien, Kunststoffen aller Art, Leder, Holz, Papier, Bitumen, Wasser oder Reinigungsmitteln. Die Anwendung kann hier der Einsatz als Bindemittel sein oder in additiver Art und Weise als UV-Schutz, als Biozid, als Komponente mit entschäumenden oder schaumstabilisierenden Eigenschaften, als Tensid, als Farbstoff, als Crosslinker oder ähnliches.

Besonders soll die erfindungsgemäße Zusammensetzung die Herstellung von Polymerrecyclaten und deren wirtschaftliche Nutzung durch den Einsatz der erfindungsgemäßen Carbosuboxid-Popyhrin-Anionate beschrieben werden.

In den letzten Jahren vergeht sicher keine einzige Woche in der nicht mindestens einmal der Satz "Wir versinken im Plastikmüll" in den europäischen Medien und sozialen Netzwerken auftaucht! Dabei wird nicht nur über weggeworfenen Verpackungsmüll diskutiert, der in mehr oder weniger großen Stücken zerteilt in die Umwelt gelangt, sondern daneben finden sich auch viele tägliche Verbrauchsprodukte, die sogenanntes Mikroplastik enthalten. Dieses wird über Auslaugungen in die Luft, Erde oder Wasser abgesondert. Meist finden sich diese letztendlich im Wasser wieder, wo sie an grobe Partikel als Fein- und Feinstteilchen angelagert werden.

Viele moderne Produkte des täglichen Gebrauchs enthalten Kunststoffpartikel oder Kunststofffäden. Diese Kunststoff-Produkte finden sich dann zum Beispiel als Füllstoffe oder als strukturgebenden Stoffe in Textilien, in Farben, Lacken, Putzen, Mörteln, Betonsteinen, Kosmetika, Zahnpasta, Papierprodukten, Reifen und vielen anderen alltäglichen Dingen. Die Konzepte des mordernen Recycling sind mehrere Jahrzehnte alt und längst Alltag geworden und führen doch zu keiner großen kontrollolierbaren Umwälzung. Eine sinnvolle Wiederverwendung dagegen sollte jedoch den Antrieb eines effektiven Sammelns erhöhen. Müll wird dann nicht als Abfall sondern als Rohstoff gesehen. Bisher wird das Altplastik noch sehr oft in Verbrennungsanlagen entsorgt; hierbei stehen viele Projekte zur Wärmeerzeugung oder Stromgewinnung immer wieder im Vordergrund. Besonders das Land Schweden hat hier auf diese Art die Wiederverwertung optimiert. China sammelte dagegen in den letztem Jahrzehnt verstärkt den "Gelbesackmüll" aus Europa, sortierte ihn im eigenen Land, zerkleinerte das Material und verkaufte dieses wieder als Feedstocks zurück in die verarbeitende Industrie. Und trotzdem ist Plastik für uns immer noch zu wertlos, denn es verschmutzt weiterhin und immer mehr unseren Lebensraum.

Die vorliegende erfindungsgemäße Zusammensetzung soll nun dabei helfen, den Plastikmüll als wertvolle Rohstoffquelle darzustellen und diesen in einen alternativen wirtschaftlichen Kraftstoff umzuwandeln, der auch gleichzeitig die NOx und CO/ CO2 Belastung senkt.

Eine solche sinnvolle Wiederverwendung scheint die Umwandlung in einen Energieträger wie Heizöl oder Schiffsdiesel zu sein. So wird das Herstellen von Heizöl aus Plastikmüll durch eine Destillation bei 400°C nach einem Schweizer Patent beschrieben. Die Technik dafür ist eigentlich seit den 1930er Jahren bekannt. Weiterentwickelt hat sie das deutsche Umwelttechnik-Unternehmen Nill Tech in Baden-Württemberg.

Die Kosten des Verfahrens haben sich in den letzten Jahren von 1,2 Euro bis zu 2 Euro pro Liter Recyclat-Öl entwickelt. Somit wird es als unwirtschaftlich dargestellt. Da sich auch der Wirkungsgrad bei 80-85 % im Vergleich zum normalen Heizöl eingependelt hat, hat sich dieser Weg bisher nicht wesentlich durchgesetzt und erfährt in der öffentlichen Meinung zu wenig Wertschätzung.

Dagegen scheint das Mischen desselben Systems zum Beispiel mit Wasser eine denkbare Verbilligung des Produktes.

Das Konzept ein Alkangemisch mit Wasser als Verbrennungskatalyator zu versetzen ist nicht neu und seit fast hundert Jahren bekannt.

Ein entscheidener Weg der letzten Jahrzehnte bei der Entwicklung neuer Kraftstoffe mit dem Ziel einerseits Resourcen zu schonen, dabei genauso gut oder sogar besser zu verbrennen und gleichzeitig die Verbrennungsgase zu reduzieren, führt schon lange über die Idee mit hohen Mengen an Wasser im Treibstoff zu arbeiten. Dass inpolare Stoffe (Benzin, Diesel, Öle) mit Wasser viel besser verbrennen erscheint im ersten Moment paradox, hat aber eine wissenschaftliche Erklärung.

Wasser hat die Eigenschaft bei Energiezufuhr in Radikale zu zerfallen. Dies passiert bekannterweise an photoelektrischen Grenzflächen wie zum Beispiel bei nanoskaligen Anatas oder Calciumtitanat wie unter der Einwirkung von UV-Strahlung beobachtet. Dies passiert aber auch bei Temperaturen und erhöhtem Druck schon über 110°C, also jenen Bedingungen, die in einem Dieselmotor vorliegen.

Ein Teil des Wassers zerfällt dann gemäß folgender Reaktionsgleichungen:

H2O → OH· + H·

2 H· → H2

O2 (Luft) + H· → OH· + O·

H2 + O· → OH· + H·

Die gebildeten Radikale sind sehr aggresiv und greifen sogar die C-H Bindung in Alkanen an und führen zu spontanen Crackprozessen über eine weitere Radikalbildung.

Die Angriffe an Alkan können dann wie folgt dargestellt werden:

C2H6 + H· → C2H5· + H2

C2H6 + O·· → C2H5· + OH·

C2H6 + OH· → C2H5· + H2O

Und die weiteren Reaktionen mit einem Alkanradikal wären dann exemplarisch wie folgt:

C2H5· + H· → 2 CH3·

C2H5· + O· → H· + CH3CHO

C2H5· + O· → CH2O + CH3·

C2H5· + O2 → C2H4 + HO2·

Die Zugabe von Wasser führt somit zu einer vollständigeren Verbrennung, vor allem dann, wenn dabei folgende Voraussetzung als gegeben vorliegen:

Je mehr Grenzflächen vorhanden sind, also je kleiner die Emulsionsteilchen bei einem Wasser-Kraftstoffgemisch in Form einer stabilen transparenten Kolloidemulsion sind und somit unmittelbar nebeneinander existieren, desto schneller, vermehrter und heftiger finden diese Reaktionen statt.

Wasser hilft also enorm beim Verbrennen, da die Radikale nun in der Lage sind die Kohlenwasserstoffe anzugreifen, bevor der eigentliche Sauerstoff zum Kraftstoff gelangt. So können die Moleküle schon in kleinere Teile vorzerlegt werden, bevor der Luftsauerstoff in ihre Nähe kommt. Die Verbrennung dauert somit länger, läuft kontinuierlicher und vor allem vollständiger ab. Da der Anteil an Kohlenstoff und Luft im gesamten System bezogen auf den Liter geringer ist, entstehen zwangsläufig weniger Abgase in Form von CO, CO2 und NOx.

Zu der optimalen Wassermenge gibt es unter Experten unterschiedliche Meinungen. Man nimmt nach dem bisherigen Stand des Wissens jedoch an, dass der Wassergehalt zwischen 20-35% liegen sollte.

Zur Realisierung solch hoher Wassergehalte bedarf es jedoch einer optimalen Emulgierung.

Zur Lösung dieses Problems, welches seit gut 90 Jahren bekannt ist, gab es in diesem Zeitraum viele verschiedene Ansätze, die aber mehr oder minder mit gewissen Problemen behaftet waren bzw. noch sind.

Sowohl Focke Wulf wie auch Mitsubishi Motors arbeiteten während des 2. Weltkrieges fieberhaft an einer stabilen Wasser-Öl-Diesel-Emulsion durch das Einbringen eines hohen Anteils an Kohlensäure in einem Methanol-Wasser-Gemisch. Dies führte aber zu trüben Lösungen mit einer nur geringen Stabilität. Immerhin erreichte man für eine kurze Zeit von 20 Minuten bis zu 300 PS mehr in den Jagdfliegern. In den späten 80er Jahren wurde von einigen Ingenieuren der Versuch unternommen das Wasser mit 1200 bis 1500 V Gleichstrom zu behandeln, um es anschließend mit Methanol und Diesel in eine Mikroemulsion zu überführen; diese war aber nur bis etwa 55°C-60°C über einige Tage stabil. Auch wurde das Verfahren als kostenintensiv und gefährlich eingestuft.

In China wurde Mitte der achtziger Jahre bereits mit Ammoniumlaurylsulfat als Emulgator gearbeitet, um ein Drittel Wasser in Diesel einzuarbeiten. Die entstehende Emulsion sieht aus wie Milch, kann aber aufgrund der Tröpfchengröße nicht dauerhaft stabil bleiben und auch nicht die Leistung eines reinen Kraftstoffs erbringen und Wasser wie oben beschrieben effektiv als Verbrennungskatalysator nutzen. Entsprechende Emulgatoren werden von BASF unter anderem in WO 2004/018405 A1 genannt.

Stabilere Milchemulsionen werden mittlerweile mit einem Ultraschallverfahren erzielt, die bereits im Schiffbereich erfolgreich getestet werden. Die Beschreibung findet sich recht ausführlich unter https://sonotronic.de/technologies/ultrasonic. Um die Verbrennung hier allerdings zu optimieren, werden diesen Kraftstoffen oft noch Metallkatalysatoren oder Nano-Mineralien aller Art zugeführt. Leider sind diese Metallverbindungen teuer (zumal auch Seltenerden verwendet werden). Diese sind zudem meist giftig und unbekannt in ihren Verbrennungsprodukten. Indischen Wissenschaftler gelang hier das Einarbeiten von Nanozinkoxid in DME zur Erzeugung von Mikroemulsionen. Die Benutzung anorganischer Stoffe in einem Kraftstoff macht daher nur wenig Sinn, da diese über die Abgase in die Luft als Feinst- und Nanosstaub mit unbekannter toxikologischer und ökotoxikologischer Wirkung gelangen.

Sehr gute Erfolge wurden dagegen seit 2000 mit reiner organischer Ölsäure und deren Derivate als Emulgator erzielt.

Zur Emulgierung von Alkan-Wassermischungen wurden in den letzten fast 20 Jahren die genannten Chemikalien verschiedenster Art somit wiederentdeckt. Mit Hilfe dieser Materialien entstanden weitgehend stabile Emulsionen, die in Verbrennungsmotoren vernünftige Energiewerte mit reduzierter Abgasmenge vorweisen können. Langjährig angelegte Feldversuche zeigen nun nach ca. zwei Jahrzehnten die Schwächen dieses Emulgatorsystems. Die Stabilität der Emulsion, welche bei der Produktion auch nur bei Temperaturen oberhalb von 60°C erzielt werden kann, varriert nun stark, meist in eimem Temperaturbereich von oberhalb 70°C und unterhalb von 15°C. Es kommt zu stärkeren Entmischungserscheinungen oberhalb von 70 °C, die Folge, die Leistung sinkt drastisch. Hier wirkt dann das Wasser nicht mehr brandfördernd, sondern eher brandmindernd. Auch ist man meist limitiert was die Wasserzugabemenge angeht und man erreicht nur Beimischungen von bis zu 15%. Unterhalb von 15°C bis in den tieferen Temperaturbereich neigt die Ölsäure stark zu Polymersiation. Die Viskosität steigt somit unkontrollierbar an und ist im modernen Motor nicht mehr anwendbar.

Experten im Bereich der Emtwicklung moderner Benzinsysteme und Biodieselentwickler machen zudem die Ölsäure verantwortlich für die vermehrte Entstehung von Aldehyden im Abgasstrom vor allem bei 300°C - 400°C. Nachdem nun Ölsäuren auch den mikrobiellen Bewuchs im Alkan-Wassersystem nachweislich fördern, müssen weitere giftige Biozide zur Verhinderung zum Einsatz kommen.

Obwohl es hiermit zum ersten Mal möglich war, stabile halbopake bis transparent wirkende Mikroemulsionen herzustellen, war es letztendlich dennoch nicht möglich langzeitstabile Nanoemulsionen von 1:1 Diesel-Wasser herzustellen; auch mussten kostenintensiv hohe Mengen an Emulgator mit 0,2 bis 1,2 Teilen in die Rezeptur eingebracht werden.

Zuden hat es sich gezeigt, dass diese Systeme nur beschränkt Benzinkraftstoffe oder alternative Dieselprodukte wie dem Biodiesel mit Wasser emulgieren. Es lässt sich somit ein Energieträger auf Basis eines Polymerrecyclates unter Einbringen von Wasser nicht in eine ausreichend stabile transparente Kolloidemulsion überführen.

Ein Grund hierfür liegt aber nicht zuletzt auch darin, dass es bisher kein homogenes lipophobes oder lipophliles Polymerrecyclat als stabile Fluidmischung mit einer geringen Korngröße von mindestens < 0,9µm auf dem Markt zu wirtschaftlichen Preisen zu erwerben gibt.

Während einige Kunststoffe wie auch dem PMMA noch von einigen organischen Lösemitteln angegriffen werden, macht das Aufarbeiten von thermoplastischen Materialien wie PE und PET enorme Probleme. Nach dem heutigen Wissensstand verwittert eine PET Flasche in der freien Natur erst nach 400-500 Jahren. Zur Aufbereitung von PET schlägt das Fraunhoffer Institut zum Beispiel das Bearbeiten mit Salzschmelzen bei Temperaturen zwischen 180°C bis 280°C vor. Die so entstehende heiße Schmelze aus flüssigem PET/PE und Salz wird anschließend in Wasser abgeschreckt. Die Salze lösen sich auf und es entstehen Partikel und Flakes von einigen Hundertstel Mikron bis hin zu einigen Milimeter Größe, die dann nach dem Filtrieren und Reinigen als Feed weiter verarbeitert werden. Eine interessante Wiederverwendung erscheint hier das Einarbeiten von Kunststoffpartikeln in feinster Form als Füllstoffe in Wandfarben, als Gerüstbildner in Klebstoffen und in Silikonbaustoffen.

Gerade letztere Systeme bergen große Vorteile, bringen aber auch Schwierigkeiten mit sich. Es ist bekannt dass Silikone aufgrund ihres typisch anorganischen Gerüsts einerseits und der organischen Reste andererseits im Molekül eine Zwischenstellung zwischen den anorganischen und den organischen Verbindungen einnehmen. Sie sind als Hybride anzusehen und weisen ein einzigartiges Eigenschaftsspektrum auf, das von keinem anderen Kunststoff erreicht wird. Eine hohe Elastizität verbunden mit einer guten Temperaturbeständigkeit bei gleichzeitiger chemischer Beständigkeit besonders gegenüber Alkoholen, Säuren und Laugen machen zum Beispiel Silikondichtungsmassen zu einem einmaligen und beliebten Baustoff. Baustoffschaum und Dichtungen aus Silikon für Sanitärräume werden daher schon lange als unverzichtbar angesehen.

Doch kennt der Fachmann auch Nachteile. Der organische Charakter mit dem hohen Sauerstoffanteil im ausgehärteten Gesamtpolymer, machen auch diese Stoffe anfällig gegen Umwelteinflüsse wie die Angriffe von Mikroorganismen aber auch durch physikalische Einflüsse wie der der ultravioletten Strahlung. Die optimierte Herstellung wiederum erfordert nun das Einarbeiten von speziellen Additiven, die dagegen wirken können. Das Einarbeiten von gerade diesen Stoffen erfordert genaue chemische Kenntnisse und ausgeklüglete Herstellungsverfahren. Es gilt somit unter zu vermeiden, dass sich physikalische Werte wie zum Beispiel die Viskosität nicht ändern oder dass auch die Vernetzung des Polymergemisches nicht unkontrollierbar wird. So wurden in der Vergangenheit auch immer wieder Versuche unternommen "freundliche" oder sogenannte ungiftigere Biozide zum Schutz des verfestigten Polymers einzusetzen. Während Zink-, Zirkon-, Mangan-, Kupfer- und auch Silberverbindungen bis hin in den nanoskaligen Bereich sehr gute Schutzwirkung zeigten, veränderten diese aber auch nach einiger Zeit das Eigenschaftsprofil. Einige Verbindungen wirkten in ihrer Eigenschaft als Crosslinker wie Zirkon oder Zink unkontrollierbar verfestigend. Silber dagegen verfärbte im Laufe der Zeit die Silikondichtmasse gelb-braun bis braunschwarz oder grau. Hiermit wären beim Einsatz von Silber nur dunkle pigmentierbare Farbtöne in solchen Baustoffen sinnvoll verfügbar. Auch stellt sich oft die Frage, wie nun das Additiv, z.B. ein Farbpigment eingearbeitet werden soll. Im industriellen Bereich wird oft der Weg über das Modifizieren eines Silikonöls gegangen. Mit Walzenstühlen werden so zum Beispiel Pulverpigmente oder lösemittelhaltige Farbpasten in Silkonöle mit UV-Schutzmittel und Bioziden versehen dispergiert und dann in den weiteren Herstellungsprozess als Rohstoffkomponente zugegeben. Zur Einarbeitung werden auch gerne Lösemittel wie Xylole und deren Derivate verwendet. Geht das Endprodukt dann aber in den Do-It-Yourself-Handel ist die Auswahl der Grundchemikalien und auch letztendlich deren Konzentration stark beschränkt.

Das Kombinieren von Silikon und Wasser könnte hier eine denkbare Lösung sein. Da Wasser in der Regel die Viskosität noch weiter senkt, müssten aber diese Systeme dann rheologisch durch bekannte Stoffe wie zum Beispiel aus dem Bereich der Cellulosen wie HECs oder MHPCs eingestellt werden. Diese stellen als potentielles Nährmedium aber wiederum einen beliebten Angriffspunkt für Pilze und andere Mikroorganismen dar. Eine wesentliche Erhöhung vom Konservierungsstoffen oder gar von giftigeren Bioziden wäre die Folge. Für den Endanwender bedeutet dies also den Austausch von emittierenden Lösemitteln durch emittierende Biozide, die dann unter Umständen allergieauslösend sind.
Auch sind die angestrebten wässrigen Mischungen nicht stabil, sondern müssten emulgiert auf den Markt kommen. Dies kann nur erfolgen durch das Einbringen typischer Emulgatoren und den Einsatz einer industriellen Herstelltungsechnologie. So werden in der Kosmetikindustrie polare und unpolare Stoffe mit hohen Schergeschwindigkeiten in sogenannten Dispergatoren von mehr als 5000 rpmin unter Einsatz von Emulgatoren zu mayonnaiseartigen Massen zur Weiterverarbeitung aufbereitet. Auch kommen, wie bereits beschrieben, in den letzten 15-20 Jahren hier Hochenergie-Anlagen zum Einsatz. Diese nutzen ausgelöst durch Ultraschall das Prinzip der Kavitation. Die Folge ist eine feine Verteilung eines unlösbaren Stoffes in einem anderen. Damit die Stoffe nicht wieder auseinander fließen bedarf es nun eines chemischen Abschirm-Mechanismus. Die eine Phase der Emulsion in Form von vorliegenden Tröpfchen wird umgeben von "Abstandshaltern". Dem Fachmann ist hier eine Vielfalt von organischen Verbindungen bekannt. Daneben werden seit 100 Jahren auch nanoskalig vorliegende Pulver aller Art, die diese Aufgabe übernehmen können, verarbeitet.

Das Behandeln von Silikon-Gemischen mit hochfrequentem Strom wird daneben seit Jahrzehnten auch immer wieder erprobt, um langzeitstabile Gemische von unlösbaren Fluiden zu erhalten. Der Handwerker oder der Baustoffhändler wird aber somit nach dem jetztigen Stand der Technik niemals vor Ort selber seinen Baustoffschaum mit einem angepassten Silikonöl (z.B. mit einem Farbstoff) anpassen.

Die Lösung zur Hestellung von wirtschaflichen Silikonöl-Wasser Emulsionen wird aber auch in folgender Hinsicht bedeutend. Vor nun fast 50 Jahren wurde aus dem Slogan "Sand zu Benzin" der Silanverbrennungsmotor geboren. Da als Verbrennungsprodukte im Abgas Siliciumdioxid bzw. undefinierte SiOx oder SiOXHY entstehen, kann logischerweise diese Art der Motoren nur als geschlossenes System in unserer Atmosphäre arbeiten. Die Wirtschaftlichkeit dieses Konzeptes wird aber hauptsächlich durch die teuren Silikon-, Silan-, o.ä.-Verbindungen in Frage gestellt. Das Einarbeiten von Wasser oder anderen hydrophilen Chemikalien in Form einer Kolloidemulsion rückt diese Bedenken hier dagegen wieder in ein anderes Licht. Man geht ausserdem davon aus, dass die Verbrennung zu reinem Siliciumdioxid analog zu den alkan basierten Materialien optimaler ablaufen wird. Im Bereich der Raumfahrttechnik speziell im Bereich einer möglichen Planetenbesiedlung mit sowieso für den Menschen giftiger Atmosphäre sind solche ausgereiften Oxidationsaggregate zur Enegiegewinnung vom großen Interesse.

Die erfindungsgemäße Zusammensetzung dieser Patentschrift liefert nun in seiner kombinatorischen Zusammensetzung einen Beitrag zur ölsäurefreien Wasser-Alkan-Polymer-Nanoemulsionen einerseits und dem witschaftlichen Recycling eines breiten Spektrums an Polymergemischen andereseits in der Anwendung als Energieträger.

### Detaillierte Beschreibung der Erfindung

Im Folgenden soll die erfinderische Höhe der vorliegenden Schrift sowie die Synthesen und deren Ergebnisse beispielhaft verdeutlicht werden.

In einem ersten Schritt der Erfindung wird exemplarisch die Bereitstellung einer Kunststoffdispersion auf Recyclatbasis beschrieben. Hierzu werden PE und PET Reste in einer Mühle soweit zerkleinert, dass die durschnittliche Korngröße mit einem d90-Wert wesentlich kleiner als < 1µm angegeben werden kann.

Das Zerkleinern von oragnischen oder anorganischen Pulvern mittles Trommel- oder Perlmühlen ist seit mehreren Jahrzehnten unlängst Stand der Technik geworden. Für thermoplastische Materialien hat sich das System bisher großtechnisch noch nicht durchgesetzt. Der Grund hierfür ist recht einfach. Die Zerkleinerung beruht im wesentlichen darauf, dass das Mahlgut zwischen harten Mahlkugeln bzw. Mahlperlen mit hoher Geschwindigkeit zerrieben wird. Dabei wird unter anderem viel Reibungswärme erzeugt. Die Geräte müssen daher meist gekühlt betrieben werden. Bei thermoplastischen Kunststoffen wird die eingebrachte Energie in verformen aber nicht in eine reine Zerkleinern umgesetzt. Aus diesem Grund werden solche Polymere meist mit Kälte versprödet und erst dann gemahlen. Dieses Verfahren ist allerdings sehr teuer und die meisten Mahlaggregate sind großtechnisch hierfür gar nicht ausgelegt.

In der vorliegenden Schrift wird nun ein alternativer neuer Weg vorgeschlagen. Hierzu wird die Eigenschaft der besagten Kunststoffe ausgenutzt, dass diese durchaus sehr gut durch "Schneiden" teilbar sind. Für die dargestellten Versuche wurde eine Fliehkraftkugelmühle P100 der Firma Retzsch benutzt. Die Mahlkörper wurden aber vorher mit einem Lack mit Diamantschneidkörnchen (hier: Diastar) beschichtet (Tab.1).

**Tab.1 : Allgemeine Zusammensetzung für einen Beschichtungslack mit Diamantpulver für Schneideffekte beim Perlmahlen**

| Rohstoffbezeichnung | Gewichtsprozent % |
|---|---|
| Cymel 328 | 5 |
| Buthylgkykol | 2 |
| Isopropanol | 5 |
| Lopon 890 | 0,1 |
| Silikophen P80 (Fa. Evonik) | 52 |
| Diastar ADS 40-60µm | 12 |
| Diastar ADS 8-16µm | 8 |
| Diastar ADS 2-4µm | 5 |
| Diastar ADS 1-2µm | 4 |
| Byk Cloisite 116 | 1 |
| Carnauba Wachs Emulsion | 1 |
| Byk 024 | 0,1 |
| Byk 4509 | 3 |
| Innosil WW (Fa.Inomat) | 5,1 |
| Tafigel Pur 48 | 0,2 |
| 1,2-Polypropylenglykol | 0,2 |
| Summe | 100,0 |

Die Mahlkugeln wurden dabei mit einem Drahtkorb in den Lack getaucht, und anschließend wurde der Überschuß abgeschleudert und direkt mit Warmluft (ca. 100°C) getrocknet.

Anschließend wurde der Lack bei 220°C 45 min eingebrannt. Fehlstellen auf der Kugel wurden händisch nachlackiert und nachgetempert. Die Schichtdicke betrug ca. 25µm.

Damit auch der Mahlraum der Mühle geschützt war, gab es auch hier einen seperaten Lacküberzug (Tab.2).

**Tab.2: Allgemeine Zusammensetzung für einen Beschichtungslack mit Diamatpulver für den Mantel einer Perlmühle beim Perlmahlen**

| Rohstoffbezeichnung | Gewichtsprozent % |
|---|---|
| Cymel 238 | 1,1 |
| Buthylgkykol | 3 |
| Isopropanol | 5 |
| Lopon 890 | 0,1 |
| Silikophen P80 (Evonik) | 55 |
| Diastar ADS 1-2µm | 20 |
| Byk Cloisite 116 | 2 |
| Carnauba Wachs Emulsion | 5 |
| Byk 024 | 0,1 |
| Byk 4509 | 2,5 |
| Innosil WW (Inomat) | 6 |
| Tafigel Pur 48 | 0,1 |
| Polypropylenglykol | 0,1 |
| Summe | 100,0 |

In diesem Fall wurde nun der Mahlinnenraum und der Deckel des Mahlbehälters mit dem obigen Lack händisch per Pinselauftrag 6 mal beschichtet und entsprechend der obigen Anweisung getempert. Damit waren die Vorbereitungen abgeschlossen und die eigentlichen Versuche konnten stattfinden.

Ein Gemisch aus Polymerschnipsel von 60% PET, 30% PE und 10% PP mit einem d90-Wert von ca. 2mm wurde nach dem Trocknen bei 110°C +/-5°C in eine konventionelle Stein-Trommelmühle (ebenfalls mit der entsprechenden Lackierung aus Tab.2 versehen) überführt und dort 8 h lang nach folgendem Versatz bei Raumtemperatur (RT) gemahlen (Tab.3):

**Tab.3**

| **Komponenten** | **Gewichtsteile** |
|---|---|
| Mahlansatz Polymerschnipsel | 42 |
| Polypropylengylcol (Pluriol 800) | 51 |
| Byk 349 | 2,5 |
| Texanol | 4 |
| Tego Airex 920 W | 0,5 |

Die entstandene Suspension wurde anschließend über einen 63µm Filter gegeben und der Rückstand mit ca. 2,8% bestimmt.

Die so aufbereitete Suspension wurde anschließend in zwei weiteren Stufen weiter zerkleinert. Hierzu wurde die Suspension zunächst mit den unten aufgeführten Prozesshilfsmitteln auf 70°C erhitzt und dann in einer Planetenkugelmühle der Firma Retsch bei 750 rpmin eine halbe Stunde lang aufgemahlen (Tab.4) :

**Tab. 4**

| **Komponenten** | **Gewichtsteile** |
|---|---|
| Mahlansatz Trommelmühle | 94,9 |
| Buthylacrylat | 4 |
| Texanol | 1 |
| Tego Airex 920 W | 0,1 |

Dieser Aufbereitungsschritt ließ die durchschnittliche Korngröße unter 3,8 µm sinken. Nach dem nochmaligen Aufheizen des Gemisches auf 85°C erfolgte ein weiterer Mahlvorgang von 2 Stunden. Dabei wurde immer wieder im Abstand von 20 min eine Messporobe zur Korngrößenbestimmung genommen.

Die lipophile Polymersuspension aus Recyclat (im Weiteren als PY1 benannt) hatte danach eine Korngröße mit einem d90-Wert von ca. 90 nm. Weitere Mahlversuche bei verschiedenen Temperaturen erzeugten Korngrößen mit d90-Werten von 25nm bis zu 467 nm. Exemplarisch wurde aber in der erfindungsgemäßen Zusammensetzung in seiner kombinatorischen Formulierung der hier dargestellten Rezeptur mit PY1 weitergearbeitet.

Zur Herstellung einer stabilen Nanoemulsion wurde im zweiten Schritt die kolloidale Carbosuboxid-Lösung wie folgt und exemplarisch dargestellt synthesiert.

Dem Fachmann aus dem Bereich der Entwicklung von anorganischen Katalysatoren mittels Tonmineralen ist folgendes bekannt: Materialien, die aus plättchenförmigen Schichtpaketen bestehen, können durch das sogenannte Pillar-Verfahren aufgebrochen werden. Die Abstände zwischen den einzelne Plättchen, die in der Regel elektrostatisch oder ionisch verknüpft sind, können hierbei ganz gelöst oder aber die Zwischenräume können ganz oder teilweise durch Fremdionen neu belegt werden. Die erfindungsgemäße Zusammensetzung nutzt diese Idee aus, um ein kolloidales Carbo-Makromoleküle mit einer hohen Dichte an sp2-hybridisierten Zentren und freien Pi-Elektronen an seiner Oberfläche zu erzeugen. Das Zerreißen von Graphit in einzelne Schichten in der Art der Erzeugung eines Graphenoxides findet hierbei nicht in einer Dispergiermaschine wie üblich statt, sondern wird in einem Knetaggregat unter Einsatz von Cellulose und dem Einwirken einer starken organischen Säure realisiert. Als Kneter eigenen sich für den Chargenbetrieb Doppel-Z-Kneter, wie z.B die der Firma Werner und Pfleiderer. In einem Laborgerät mit einem Füllvolumen von 3 Litern wurde nun folgender Masseansatz verarbeitet (Tab.5).

**Tab.5: Pillar-Knetversatz von Graphit**

| Rohstoffbezeichnung | Gewichtsprozent % |
|---|---|
| Acrylsäure | 17 |
| Graphit (d50 ca. 1,1µm) | 42 |
| PEG / Chlorophyll (Tab.6) | 25 |
| Ashland MHPC 1034 | 1,2 |
| Ashland MHPC 724 | 0,8 |
| Wasser | 14 |
| Summe | 100,0 |

Der Knetvorgang wurde gestartet, indem das Graphitpulver vorgelegt und ein Teil der Wassermenge (ca. 3-6%) bei laufenden Knethaken auf die Oberfläche gesprüht wurde. Nach ca. 5-10 min erfolgte die Zugabe der Cellulosepulver (Fa.Ashland). Das ganze Material ging so bei dem weiteren Kneten in eine mehr oder weniger feste Paste über. Durch diesen Vorgang konnte die Kraft der Knethaken besser auf das Pulver übertragen werden und ein starker Zerkleinerungsprozeß desselben kam in Gang. Die Knettemperatur wurde auf 48°C erhöht und das restliche Wasser zugegeben. Nach einer Stunde erfolgte die Zugabe der Acrylsäure bei gleichzeitiger Erhöhung auf 60°C. Der Knetvorgang wurde nun für weitere 90 min fortgesetzt. Zwischendurch wurde der innere Knettrog und die Knethaken immer mal wieder von Anbackungen befreit. Chemisch gesehen wurde dabei das Graphit an der Oberfläche nach und nach in ein salzartiges Carbo-Acrylat umgewandelt und die Bindekräfte zwischen den einzelnen Schichten geweitet und geschwächt. Nach den besagten 90 min wurde nun exemplarisch dargestellt eine modifizierte Chloropyll a - Lösung dazugegeben (Tab.6).

**Tab.6: Chlorophyll-Reaktivmischung in Mischreihenfolge**

| Rohstoffbezeichnung | Gewichtsprozent % |
|---|---|
| Diethylether | 23 |
| PEG 400 | 37 |
| Chlorophyll a | 28 |
| Glycerin (techn.) | 10 |
| Phosphorsäure (85%) | 3 |
| Summe | 100,0 |

Da Chlorpyll a in diesem Fall das Element Mg enthält und es in der nachfolgenden Kolloidemulsion als störendes Ion empfunden wurde, erfolgte zur Aufbereitung der Reaktivmischung unter der Zugabe von Phosphorsäure, die das Magnesium in ein in PEG unlösliches Phosphat umwandelte. Im Zentrum erfolgte nun der Einbau von Hydroniumionen, während das Salz abzentrifugiert wurde. Die so aufbereitete Mischung wurde dem Knetvorgang zugeführt. Das PEG und der Ether sorgen als sogenannte Interkalation für einen Transport in die Schichtzwischenräume. Eine 10%ige Etyhliminlösung wurde zu 2,5% während des Knetens noch als zusätzlicher Haftvermittler hinzugefügt. Somit erfolgte die endgültige Fixirung des Porphyrins in dem Plättchenzwischenraum. Das ganze Gemisch wurde noch 2 h bei 60°C geknetet, danach erfolgte gegen Ende des Vorganges noch ein Nachkneten von 20 min unter Zugabe von 4 % Hydrazin als Reduktionsmittel und dem Anlegen eines Unterdruckes von 200mbar bei einem gekühlten Kneter von 15°C. Das Material wurde anschließend unter Vakuum gefriergetrocknet und die Paste trocken in einer Trommelmühle zerkleinert bis auf etwa eine Partikelgröße von 100µm.

Im Anschluß wurde eine kolloidale gelb-grüngräuliche Lösung aus 65% Wasser und 35% des erhaltendem Pulver angesetzt. Nach

Rühren bei 60°C über 6 h entstand eine wässrige, transparente, kolloidale Lösung mit einer Teilchengröße von nur 32 nm (im Weiteren als GR1 benannt). Bei weiteren Knetversuchen unter Einsatz von veränderten Parameterm wie Temperatur, Materialmengen und durch den Einsatz verschiedener Porphyrinverbindungen erzeugte der Prozeß Materialien mit Korngrößen von d90-Werten von 12nm bishin zu 489 nm. Exemplarisch wurde aber in der erfindungsgemäßen Zusammensetzung in der kombinatorischen Mischung der hier dargestellten Rezeptur mit GR1 weitergearbeitet.

### Ergebnisse

### Die Herstellung einer langzeitstabilen Kolloidemulsion bei Raumtemperatur

Es erfolgte anschließend die Herstellung einer ölsäurefreien und langzeitstabilen kolloidalen Fluidmischung aus lipophilen und lipophoben Fluiden bei Raumtemperatur.

Hierzu wurde (als erfindungsgemäße Zusammensetzung exemplarisch dargestellt) die obige Polymerkolloiddispersion PY1 mit 60 Gewichtsprozent bei einer Temperatur von 19,5°C vorgelegt. Unter Rühren wurde nun 3,5 Gewichtsprozent EDTA als Dispergator zugegeben und solange bei Raumtemperatur gerührt bis eine klare Lösung vorlag. Zügig wurden nun 10 Gewichtsprozent Ethanol zugegeben und anschließend langsam 1,5 Gewichtsprozent TRIS als pH-Wert Stabilisator. Das Reaktionsgemisch erwärmte sich hierbei etwas über 35°C. Das Reaktionsgemisch wurde nun eine Stunde nachgerührt bis es vollständig klar wurde. Danach wurde 20 Gewichtsprozent Stadtwasser in die Mischung gegeben. Die Transparenz der Fluidmischung ging sofort verloren und nahm einen milchig-dispersen Zustand ein. Im Ruhezustand trat zudem eine deutliche Phasentrennung der Mischung ein. Zum besseren Verständnis wurde diese Mischung bei verschiedenen Temperaturen gelagert und zwar bei 40°C, 50°C, 60°C 70°C und 80°C. Weder eine Lagertemperatur, noch eine bestimmte Lagerdauer, noch eine weitere mechanische Behandlung im Dispergator oder eine pH-Wert Veränderung konnten die obige Mischung in eine zumindest milchig stabile Dispersion überführen. Der Versuch von oben wurde nun wiederholt und die kolloidale Mischung GR1 wurde mit 5 Gewichtsprozent als letzte Komponente eingerührt. Das eingebrachte Wasser wurde spontan bei Raumtemperatur kolloidal verteilt. Es entstand eine sehr transparente Lösung (im Weiteren als EFG1 bezeichnet, Bild 1.) ohne jegliche Phasentrennung. Die Lösung mit einem pH-Wert von 7,6 wurde nun bei verschiedenen Temperaturen über Wochen hin untersucht. Es gab im Temperaturbereich von -5° bis 80°C keinerlei sichtbare Veränderung wie die von Schlieren, Luftblasen oder Phasengrenzen. Auch konnten keine Viskositätsänderungen zwischen einem frisch hergestellten Material und einem sechs Monate altem Material signifikant nachgewiesen werden (Tab.7).

**Tab.7: Viskositätsänderung von EFG1 über der Lagerzeit bei verschiedenen Temperaturen**

| | **EFG1** | **EFG1** |
|---|---|---|
| *Temp in* °*C* | mPas | mPas |
| **-5** | 93 | 89 |
| **10** | 91 | 88 |
| **25** | 79 | 80 |
| **40** | 67 | 69 |
| **55** | 62 | 59 |
| **65** | 45 | 40 |
| **80** | 39 | 35 |
| | sofort | nach 6 Monaten |

Nachdem die Stabilität soweit nachgewiesen werden konnte, wurde nun die Mischung EFG1 auf selbstkonservierende Eigenschaft hin geprüft.

Dem Fachman sind hier verschiedene Methoden bekannt. Hier werden die Ergebnisse nach dem Beimpfem der Lösung mit verschiedenen Testkeimen gezeigt. Dabei gilt, je weniger Mikroorgamismen noch vorhanden sind, desto resistenter ist ein Material. Als Vergleich dient zum Beispiel kommerziell erhältlicher Biodiesel (Tab.8).

**Tab.8: Wachstum von Mikroorganismen in EFG1**

| **Testkeime** | **Inokulum 1,0E+06** | **Inokulum 1,0E+06** | **Bemerkung** |
|---|---|---|---|
| Trichoderma sp. | 0,5000% | 10,5800% | Pilz |
| Aspergillus niger | 3,8000% | 20,2500% | Pilz |
| Penicillium sp. | 0,9000% | 4,3000% | Pilz |
| Corynebacterium propinquum | 3,5000% | 8,1800% | Bakterium |
| Bacillus subtilis | 0,6000% | 0,0060% | Bakterium |
| Micrococcus lylae | 7,0000% | 7,9300% | Bakterium |
| Rhodotorula sp. | 0,2000% | 1,8000% | Hefe |
| | **EFG1** | **Biodiesel** | |

Die Ergebnisse zeigten eindeutig, dass die erfindungsgemäße Zusammensetzung keinerlei biozider Nachrüstung bedarf.

### Die Verwendung als multifunktioneller Energieträger

### a. Normale Kolloidale Lösung

Ein wesentlicher Aspekt der erfindungsmäßigen Zusammensetzung war die Umsetzung von Plastikrecyclaten in eine kolloidale wässrige Emulsion zur Verwendung in Oxidationsaggregaten. Hierzu wurden externe Messungen in Testmotoren für Diesel von Kleintransportern bis 3,5 to gefahren. Es zeigte sich hierbei schon im Laborversuch, dass ein Flammpunkt von EFG1 oberhalb von 90°C liegen muss. In einem Dieselmotor zündete dagegen die Mischung unter Druck dann bei etwa 118°C (Biodiesel liegt bei 140-150°C) und lief ohne Veränderung des Motors sehr rund und stabil. Auf dieser Basis konnten dann sogar Abgastests ermittelt werden; diese zeigen EFG1 im Vergleich mit anderen Kraftstoffen (Tab.9a bis Tab.9c). Hierzu wurden die Werte auf ein Liter normiert.

Neben handelsüblichen Diesel und Biodiesel wurden für die Versuche auch Biowasserdiesel und Wasserdiesel mit je 20 Gewichtsprozent an Wasser verwendet. Die Synthese erfolgte gemäß den Angaben der Patentschrift DE 103 34 897 A1 unter Verwendung der dort angegeben Chemikalien der Ölsäure und der Ölsäurederivate wie zum Beispiel dem Wollamid.

Entsprechend der dort veröffentlichten Formulierungen entsanden unter Verwendung von Temperatur bis 60°C stabile Mikrobis Nano-Emulsionen.

**Tab.9a: Abgaswerte CO/CO2-Gehalt in ppm/l**

| | **Diesel** | **EFG1** | **Wasserdiesel** | **Biodiesel** | **Biowasserdiesel** |
|---|---|---|---|---|---|
| Temp in °C | | | | | |
| 150 | 43 | 23 | 35 | 112 | 158 |
| 220 | 76 | 35 | 55 | 151 | 148 |
| 325 | 77 | 31 | 56 | 98 | 79 |
| 410 | 89 | 37 | 49 | 75 | 86 |
| 550 | 67 | 45 | 58 | 67 | 90 |

**Tab.9b: Abgaswerte NOx-Gehalt in ppm/l**

| | **Diesel** | **EFG1** | **Wasserdiesel** | **Biodiesel** | **Biowasserdiesel** |
|---|---|---|---|---|---|
| Temp in °C | | | | | |
| 150 | 22 | 12 | 16 | 29 | 42 |
| 220 | 67 | 24 | 35 | 85 | 29 |
| 325 | 91 | 51 | 50 | 102 | 68 |
| 410 | 102 | 67 | 79 | 99 | 91 |
| 550 | 122 | 61 | 92 | 113 | 72 |

**Tab.9c: Abgaswerte Aldehyd-Gehalt in ppm/l**

| | **Diesel** | **EFG1** | **Wasserdiesel** | **Biodiesel** | **Biowasserdiesel** |
|---|---|---|---|---|---|
| Temp in °C | | | | | |
| 150 | 2 | 1 | 5 | 16 | 58 |
| 220 | 1 | 1 | 2 | 4 | 62 |
| 325 | 35 | 11 | 24 | 27 | 109 |
| 410 | 36 | 5 | 19 | 24 | 102 |
| 550 | 16 | 2 | 28 | 35 | 28 |

Es wurde deutlich, dass die Mischung in einem herkömmlichen Dieselmotor durchaus die geringsten Abgaswerte liefert. Beachtenswert war auch der geringste Anteil an Aldehyd. Gleichzeitig zeigte sich auch der Verbrauch gegenüber eines handelsüblichen Diesel auf ähnlichem Niveau.

Dagegen schneiden bisherige Lösungen als alternative Verbrennungsstoffe schlechter ab. Dies gilt auf für den Verbrauch (Tab.10).

**Tab.10: Verbrauchswerte auf 100km**

| Verbrauch | **Diesel** | **EFG1** | **Wasserdiesel** | **Biodiesel** | **Biowasserdiesel** |
|---|---|---|---|---|---|
| auf 100km | 10,9 | 11,3 | 12,4 | 11,9 | 13,5 |

### b. Redispergierbare Kolloidale Lösung als Verbrennungsstoff

Im Gegensatz zu bisherigen Verbrennungstoffen zeigte EFG1 zudem noch eine ganz einzigartige Eigenschaft, nämlich der einer filmbildenen Polymerdispersion unter Zusatz bestimmter Chemikalien. Auf Celluloseartigen Stoffen wie Holz oder auch Papier fing EFG1 an bei Temperaturen über 90°C mit dem Untergrund stark zu vernetzen.

Diese Beobachtung wurde nun ausgenutzt um ein redispergierbares Pulver herzustellen. Dem Fachmann für Polymerchemie ist durchaus bekannt, dass die besten Ergebnisse für Vernetzungen mit Anhydridmaterialien erzielt werden, und zwar mit jenen, die Makromoleküle bilden können. Hierzu zählt auch zum Beispiel das Melittsäureanhydrid.

98,5 Gewichtsprozent EFG1 wurden in einem Dissolver vorgelegt und bei Raumtemperatur erfolgte unter leichtem Rühren die Zugabe von 1,5 Gewichtsprozent Melittsäureanhydrid. Die Rührgeschwindigkeit wurde dabei auf 2000 rpmin erhöht. Nach ca. 10 min wurde die Lösung immer viskoser, bis eine kaugummiartige Masse entstand, die sich regelrecht vom Wasser zu trennen schien. Die überschüssige flüssige Phase wurde nach dem Rühren durch Filtration entfernt und die Masse bei 110°C +/-5°C bis zur Gewichtskonstanz getrocknet. Die entstandene Masse lies sich leicht mit einer Trommelmühle trocken zerreiben und man erhielt nach einer 1 Stunde ein feines graubeiges Pulver mit einer Korngröße von einem d90-Wert < 15µm. Das Pulver war nicht brennbar, konnte aber wieder redispergiert werden z.B. in Ethanol, Wasser, Glykolether aber auch anderen Lösemitteln. Eine Dispersion (als EFG2 im Weiteren bezeichnet) von 70 Gewichtsprozent vom obigen Pulver, 10 Gewichtsprozent Ethanol und 20 Gewichtsprozent Wasser wurde ebenfals als kolloidales System mit einer Partikelgröße d90-Wert von 127 nm erkannt.

Im Verbrennungsprozeß zeigte diese Mischung nur geringfügig schlechtere Werte wie EFG1. Die Zündung erfolgte erst bei 129°C und der Verbrauch lag bei 11,8 l/100km. Die Abgaswerte waren ein wenig schlechter, aber immer noch besser als die der Wettbewerbssysteme (Tab.11).

**Tab.11: Abgaswerte der redispergierten Mischung EFG2**

| | **EFG2** | **EFG2** | **EFG2** |
|---|---|---|---|
| | CO/CO2 | NOx | Aldehyd |
| Temp in °C | ppm/L | ppm/L | ppm/L |
| 150 | 27 | 13 | 2 |
| 220 | 48 | 29 | 2 |
| 325 | 40 | 61 | 15 |
| 410 | 32 | 64 | 6 |
| 550 | 30 | 65 | 3 |

Die filmbildene Eigenschaft war bei besagter Mischung nach der Redispergierung nicht mehr gegeben. Die thermische Stabilität der kolloidalen Lösung dagegen wurde noch einmal verbessert und reichte sogar ohne den Zusatz weiterer Additive von -16°C bis hin zu 120°C. Ein Temperaturwechseltest zwischen -5° und 110°C wurde nach 150 Wechseln abgebrochen, da bis zu diesem Zeitpunkt keine Phasentrennung sichtbar wurde.

### c. Redispergierbare Kolloidale Lösung in einer Farbstoffsolarzelle

Bei den Langzeittests zur Beobachtung der Stabilität fiel auf, dass die Mischung EFG2 auf Tageslicht und insbesondere auf UV Licht reagierte und zum Teil nachdunkelte. Damit war die Möglichkeit gegeben, die Lösung in einer Grätzelzelle einzusetzen. Es ist bekannt, dass Farbstofflösungen mit frei verschiebbaren Elektronen das Kernstück der Energiezelle bilden. Wenn Licht auf die Farbstoffe trifft, werden Elektronen in den Molekülen delokalisiert. Dies führt zu Ladungsungleichgewichten und somit zu einer elektrischen Spannung.

Im Labor wurden Versuche mit einer DIY-Zelle (mit den Abmaßen 10 cm x 10 cm) mit verschiedenen Farbstofflösungen vergleichend durchgeführt. Als Lichtquelle wurde ein LED Scheinwerfer verwendet. Dieser ließ sich in 256 Stufen dimen, so dass verschiedene Lichtintensitäten bewertert werden konnten. Die Spannung einer Grätzelzelle ist in der Regel von der Lichtintensität abhängig und annäherend proportional.

Auf diese Weise konnte bei RT 20°C +/-1 °C nun eine annäherende Berechnungsformel für die durchschnittliche Spannung bei gegebener Lichtintensität und Verwendung verschiedener Farbstofflösungen bestimmt werden.

Allgemein gilt bei Grätzelzellen bei einer gegebenen Temperatur:
U(Spannung in V) = ermittelter Farbstoffkoeffizient (Kurvensteigung der Spannung über der Lichtintensität multipliziert mit 100 und wiederum multipliziert mit der Lichtintensität (in %) .

Die so ermittelten Farbstoffkoeffizienten sahen exemplarisch wie folgt aus:

| | |
|---|---|
| Chloropyllmischung (siehe Tab.6) | = 2,7 |
| Johannisbeernektar (handelsüblich) | = 1,9 |
| 15%ige Cyanidin-Lösung | = 1,5 |
| 10%ige Delphinindin-Lösung | = 1,2 |
| erfindungsmäßige Zusammensetzung EFG2 | = 7,4 |
| erfindungsmäßige Zusammensetzung GR1 | = 6,5 |

Sowohl die erfindungsgemäße Zusammensetzung des kolloidalen Carbodsuboxid-Makromoleküls (GR1) als auch die daraus hergestellete kolloidale Polymerrecyclat Lösung in redispergierter Form zeigten aufgrund der ermittelten Messergebnisse ein großes Potential für die Umsetzung in einer Grätzelzelle. Durch diese halbleitenden Eigenschaften sind aber auch Einsatzmöglichkeiten im Bereich der Elektrolyte aber auch im Bau von Photozellen wie der der Solarzelle naheliegend.

### d. Kolloidale Lösung mit Silikonöl

Es erfolgte somit die Herstellung einer ölsäurefreien langzeitstabilen kolloidalen Fluidmischung aus lipophlien Silikonölen mit Wasser oder Wassermischungen.

Hierzu wurde (als erfindungsgemäße Zusammenstzung exemplarisch dargestellt) die obige Polymerkolloiddispersion PY1 mit 20 Gewichtsprozent und mit 40 Gewichtsprozent eines Silikonöls (Viskosität 100) vorgelegt. Unter Rühren wurde nun 3 Gewichtsprozent EDTA als Dispergator zugegeben und solange bei Raumtemperatur gerührt bis eine stabile und schlierenfreie nur leichtgetrübte Lösung vorlag. Nun wurden wie bereits bekannt 10 Gewichtsprozent Ethanol zügig zugegeben und anschließend langsam 2 Gewichtsprozent TRIS als pH-Wert Stabilisator. Das Reaktionsgemisch erwärmte sich hierbei etwas. Das Reaktionsgemisch wurde nun zwei Stunden nachgerührt. Eine vollständig klare Lösung wurde dabei nicht erreicht. Danach wurde 15 Gewichtsprozent Stadtwasser in die Mischung gegeben. Die Transparenz der Fluidmischung ging sofort endgültig verloren und nahm einen stark trüben Zustand an, der im Ruhezustand sofort zu einer deutlichen Phasentrennung führte. Unter Rühren erfolgte das rasche Einbringen der kolloidalen Mischung GR1 mit 10 Gewichtsprozent.

Das eingebrachte Wasser wurde bei Raumtemperatur kolloidal verteilt. Es entstand eine sehr transparente Lösung (EFG3) ohne jegliche Phasentrennung. Die Lösung mit einem pH-Wert von 7,1 wurde nun bei verschiedenen Temperaturen über Wochen hin untersucht. Es gab im Temperaturbereich von -15° bis 100°C keinerlei sichtbare Veränderung wie die von Schlieren, Luftblasen, auch bildeten sich keine Phasengrenzen aus. Auch konnten wieder keine Viskostätsänderungen zwischen einem frisch hergestellten Material und einem mehrere Monate altem Material signifikant nachgewiesen werden.

Die entstande Mischung EFG3 wurde exemplarisch demselben Verbrennungsexperiment unterworfen. Die Ergebnisse waren sehr vielversprechend. Eine Zündung im Dieselmotor gelang bei 130°C. In ersten Messungen lag der auf einen Liter normierte NOx und CO/CO2 Abgasgehalt bei nur 20-30 % im Vergleich zu einem herkömmlichen Diesel. In wieweit Stickstoff und Kohlenstoff an Silicium gebunden wurden, konnte nicht exakt bestimmt werden. Da auch besagtes Siliciumdioxid als Abgas entstand, ist dieses Material für unsere Erd-Atmosphäre in dieser Form der Anwendung undenkbar oder dann nur in eimem geschlossenen System. Dagegen war sehr beachtenswert der enorm geringe Verbrauch, der sich mit 6,2 1/100km deutlich von allen anderen gemessenen Werten abhob.

Die obige Herstellung wurde variert und 20 Gewichtsprozent von wässrigen Farbpasten anstelle des Wassers in das System eingeführt. Zur Verfügung standen dabei handelsübliche Sorten der Firma Chromaflow mit Ihrer Multicolor B Reihe. Ein breites Spektrum an Farben wurde so kreiert, die auf Lagerstabilität hin getestet wurden. Jediglich schwarze Farben, die auf anorganischen Eisenspinellen aufgebaut werden, zeigten nach 12 Wochen eine signifikante Verminderung der Viskoität und Absetz- und Phasentrennungserscheinungen. Durch Zugabe von 0,4 % eines Hylauronsäuresilikates konnte das Gemisch aber nachträglich stabilisiert werden.

Mit diesen Farbstoffen konnten Silikonbauschaum oder Silikondichtungsmassen (handelsüblich) ohne weitere Probleme eingefärbt werden. An einigen verschiedenen Baustellen wurden diese Mischungen verarbeitet, und nach einigen Wochen und Monaten begutachtet. Keines der Systeme zeigte irgendeine Versprödung, Ablösung oder sonstige Veränderung. In Feuchträumen zeigte eine so hergestellte weiße Dichtmasse auch keinerlei Pilzbefall. Die Formulierung ist so gut selbstkonservierend, dass sie keiner weiterer Biozide bedarf. Die weiße Dichtmasse zeigte auch keine weiteren Verfärbungen.

## Patentansprüche

1. Vorliegende Fluidmischung oder Fluid aus liphophilen und lipophoben Bestandteilen mit
a. einer Komponente aus einem multifunktionalen Carbosuboxid-Porpyhrin-Anionat in Lösung oder als Pulver,
b. einer Komponente aus einer multifunktionalen Polymerrecyclat-Komposition in Lösung oder als Pulver,
c. einer lückenlosen bzw. jeglich beliebigen Mischung der angegebenden Komponenten,
d. einer Korngröße d90, bestimmt gemäß ISO 20998-1:2006, von weniger als 500 nm in der Fluidmischung oder des Fluides.

2. Komposition nach Anspruch 1, **dadurch gekennzeichnet, dass** die Korngröße d90 weniger als 450 nm beträgt, vorzugsweise weniger als 400 nm, insbesondere weniger als 350 nm, beispielsweise weniger als 300 nm, wie weniger als 250 nm, vorzugsweise weniger als 200 nm, insbesondere weniger als 200 nm, wie weniger als 150 nm oder weniger als 100 nm, jeweils bestimmt gemäß ISO 20998-1:2006.

3. Komposition nach Anspruch 1 oder 2, **dadurch gekennzeichnet, dass** die Realisierung der beschriebenen Kolloidemulsion bei Temperaturen < 100°C, vorzugsweise bei Temperaturen < 60°C und im speziellem bei Temperaturen < 40°C und ohne den expliziten Einsatz von Ölsäure oder Ölsäurederivaten und ohne großen Ernergieeinsatz durch einfaches Mischen stattfindet.

4. Komposition nach einem der vorgehenden Ansprüche, **dadurch gekennzeichnet, dass** das amphipatisch wirksame Carbosuboxid-Phorpyhrin-Anionat und Mischungen derselben in Lösung oder als Pulver mit einer geringen Korngröße im kolloidalem Bereich vorliegt, wobei die Porphyrinstruktur organisch oder anorganischer Natur sein kann und dass die Korngröße als d90-Wert des Carbosuboxid-Phorpyhrin-Anionat weniger als 900 nm und vorzugsweise weniger als 800 nm beträgt, insbesondere weniger als 750 nm, beispielsweise weniger als 700 nm, wie weniger als 650 nm, vorzugsweise weniger als 600 nm, insbesondere weniger als 550 nm, wie weniger als 500 nm oder weniger als 450 nm und vorzugsweise weniger als 400 nm, insbesondere weniger als 350 nm, beispielsweise weniger als 300 nm, wie weniger als 250 nm, vorzugsweise weniger als 200 nm, insbesondere weniger als 200 nm, wie weniger als 150 nm oder weniger als 100 nm, jeweils bestimmt gemäß ISO 20998-1:2006.

5. Komposition nach einem der vorgehenden Ansprüche, **dadurch gekennzeichnet, dass** die Korngröße der Polymerrecyclat-Komposition in Lösung oder als Pulver als d90-Wert weniger als 1550 nm beträgt, vorzugsweise weniger als 1400 nm, insbesondere weniger als 1300 nm, beispielsweise weniger als 1200 nm, wie weniger als 1100 nm, vorzugsweise weniger als 1000 nm, weniger als 900 nm und vorzugsweise weniger als 800 nm, insbesondere weniger als 750 nm, beispielsweise weniger als 700 nm, wie weniger als 650 nm, vorzugsweise weniger als 600 nm, insbesondere weniger als 550 nm, wie weniger als 500 nm oder weniger als 450 nm und vorzugsweise weniger als 400 nm, insbesondere weniger als 350 nm, beispielsweise weniger als 300 nm, wie weniger als 250 nm, vorzugsweise weniger als 200 nm, insbesondere weniger als 200 nm, wie weniger als 150 nm oder weniger als 100 nm, jeweils bestimmt gemäß ISO 20998-1:2006 und dass das das Polymerrecylat vorzugsweise aus den Verbindungen und Derivaten der Polyester, Polyethylene, Polyethylenphtalate, Polyproylene und Polypropylenphtalate in jeglichem Mischungsverhältnis gewonnen wird.

6. Verfahren zur Herstellung der kolloidalen Emulsion **dadurch gekennzeichnet, dass** nach der Bereitstellung der hergestellten Einzelkomponenten an dessem Ende eine kombinatorische Zusammensetzung in lückenloser bzw. jeglicher Mischung der Einzelkomponenten entsteht.

7. Verfahren nach Anspruch 6 **dadurch gekennzeichnet, dass** das Carbosuboxid-Phorpyhrin-Anionat und Mischungen derselben in Lösung oder als Pulver durch einer Pillard-Prozeß als Interkalationsverbindung aus natürlichen oder synthesischen Graphit, Graphen, Graphitmischungen, Graphenmischungen oder Derivaten derselben gewonnen wird.

8. Verfahren nach Anspruch 6 **dadurch gekennzeichnet, dass** das Polymerrecyclat in kolloidaler Form als Pulver oder in Lösung durch einen vorwiegend schneidenden Mahlprozess im Temperaturbereich von -20°C bis 140°C, vorzugsweise im Temperaturbereich von -5°C bis 85°C und besonders bevorzugt im Temperaturbereich von 5°C bis 70°C hergestellt wird.

9. Verfahren nach Anspruch 6 **dadurch gekennzeichnet, dass** die in Lösung vorliegende Kolloidemulsion nach Anspruch 1 in eine redispegierbare Pulver- oder Pastenform überführt und wiederverwendet werden kann ohne dass sich die physikalischen und chemischen Eigenschaften weitgehend verändern.

10. Verfahren nach Anspruch 6 **dadurch gekennzeichnet, dass** die in Lösung vorliegende Kolloidemulsion nach Anspruch 1 zu Anwendungszwecken in jedem beliebigen Verhältnis mit weiteren liphophilen, lipophoben, hydrophoben und hydrophilen Bestandteilen in Lösung, als Pulver, als Paste oder als Gas gemischt werden kann.

11. Verwendung der Kolloidemulsion oder der Einzelkomponenten gemäß den Ansprüchen 1 bis 10, **dadurch gekennzeichnet, dass** eine Temperaturlangzeitstabilität im Bereich von vorzugsweise -15°C bis 130°C, insbesondere jedoch im Bereich von -10°C bis 100°C und im speziellem von -5°C bis 80°C gegeben ist. Mit der Stabilität ist das Nichtvorhandensein oder das weitgehende Nichtvorhandensein von Phasentrennungen von wässrigen und nichtwässrigen kolloidalen oder mehrmodalen Fluidbestandteilen gemeint; vielmehr kann die Flüssigkeitsmischung als transparente Nanoemulsion bezeichneten werden und das bezogen auf eine Zeitangabe von vorzugsweise von 2 Monaten, insbesondere jedoch von 4 Monaten und im besonderen aber von mindestens 8 Monaten.

12. Verwendung der Kolloidemulsion oder der Einzelkomponenten in Lösung, als Pulver oder Paste gemäß den vorhergehenden Ansprüchen, **dadurch gekennzeichnet, dass** eine Nutzung als Energiewandler bevorzugt in Oxidationsaggregaten stattfindet. Als Reduktionsstoff kann es dabei für sich alleine oder beliebig in jedem Verhältnis mit jedem bekannten Stoff zur Erzeugung derselben Wirkung gemischt und kombiniert werden. Hierzu zählen eine Vielzahl von Alkoholen, Benzinmischungen, Dieselmischungen, Biodieselmischungen, Wasserdieselmischungen, Biowasserdieselmischungen aber auch Carbazole, Lignin- oder Tanninmischungen wie auch siliciumorganische Mischungen aller Art.

13. Verwendung der Kolloidemulsion oder der Einzelkomponenten in Lösung oder als Pulver oder Paste gemäß dem vorhergehenden Ansprüch 12, **dadurch gekennzeichnet, dass** der Einsatz in Oxidationsaggegaten zur signifkanten Reduzierung von CO/CO2/COx, CxHyOz, SOx und/oder NOx führt.

14. Verwendung der Kolloidemulsion oder der Einzelkomponenten gemäß den Ansprüchen 1 bis 11, **dadurch gekennzeichnet, dass** ein Einsatz im jeglichen Bereich der Energiegewinnung und Energiespeicherung erfolgen kann. Dies beschreibt neben dem Einsatz als Reduktionsstoff in Oxidationsaggregaten auch den Einsatz in Solarzellen, Grätzelzellen oder ähnlichen Bauteilen, sowie den Einsatz in Primär- und Sekundärbatterien in Form als Elektolyt oder als Elektrodenmaterial.

15. Verwendung der Kolloidemulsion oder der Einzelkomponenten gemäß den Ansprüchen 1 bis 11, **dadurch gekennzeichnet, dass** die Eigenschaft der Gasspeicherung vorzugsweise als Speicher für Wasserstoff, Sauerstoff, Kohlenwasserstoffe oder Stickstoff genutzt wird.

16. Verwendung der Kolloidemulsion oder der Einzelkomponenten gemäß den Ansprüchen 1 bis 11, **dadurch gekennzeichnet, dass** bei der Realisierung von Beschichtungen oder Bauteilen aller Art die pyro- und piezoelektischen, elktromagnetischen, magnetischen, antistatischen oder dielektrischen Eigenschaften genutzt werden.

17. Verwendung der Kolloidemulsion oder der Einzelkomponenten gemäß den Ansprüchen 1 bis 11, **dadurch gekennzeichnet, dass** chemischkatalytische Eigenschaften genutzt werden.

18. Verwendung der Kolloidemulsion oder der Einzelkomponenten gemäß den Ansprüchen 1 bis 11, **dadurch gekennzeichnet, dass** eine funktionalisierte Verwendung in anderen Märkten wie im Bereich der Verarbeitung, der Veredlung oder der Weiterverabeitung zum Beispiel bei der Herstellung von Keramik, Glas, Beton, Putzen, Mörteln, Klebern, Lacke, Farben, Textilien, Kunststoffen aller Art, Leder, Holz, Papier, Bitumen, Wasser oder Reinigungsmitteln. Die Anwendung kann hier sowohl der Einsatz als Bindemittel sein oder in addtiver Art und Weise zum Beispiel als UV-Schutz, als Biozid, als Komponente mit entschäumenden oder schaumstabilisierenden Eigenschaften, als Tensid, als Dispergator, als Farbstoff, als Crosslinker oder Ähnliches.
